# EUROPEAN PATENT SPECIFICATION

(11) **EP 1 720 082 B1**
(45) Date of publication and mention of the grant of the patent: **31.12.2008**
(21) Application number: 05425281.2
(22) Date of filing: 03.05.2005
(51) Int. Cl.: G05B 15/02, G05B 13/02

(54) **Automatic system for the control and optimisation of fuel comsumption in a self-propelled concrete pumping machine**
Automatisierungssystem zur Steuerung und Optimierung des Kraftstoffverbrauchs in einer selbstfahrenden Betonpumpe
Système automatique pour la commande et l'optimisation de la consommation de carburant d'une pompe à béton autopropulsé

(43) Date of publication of application: 08.11.2006
(73) Proprietor: COMPAGNIA ITALIANA FORME ACCIAIO S.p.A., 20030 Senago (Milano) (IT)
(72) Inventor: Cipolla, Davide, 22070 Capiago Intimiano Como (IT)
(74) Representative: Faggioni, Carlo Maria

(56) References cited:
- DE-A1- 19 732 833
- US-A- 5 332 366
- US-A1- 2004 218 462

## Description

The present invention relates to an automatic system for the control and optimisation of fuel consumption in concrete pumps, truck mixer pumps and, in general, in self-propelled machines for concrete pumping.

DE 19732833 discloses a system for the control and optimisation of fuel consumption of a self-propelled concrete pumping machine, of the type comprising a main internal combustion engine and a pumping assembly consisting of at least one oleodynamic pump driven by such main engine and apt to drive the concrete pump, said pumping assembly being controlled by an electronic unit to keep a preset constant concrete delivery flow rate.

As known, machines for concrete pumping are employed in constructions of any kind to feed directly to the casting areas, through a long articulated arm, the concrete which has been prepared and transported on site by truck mixers, considering that the casting areas are nearly always at a certain distance - both in a horizontal and in a vertical direction - from the site of possible setting up and unloading of the truck mixers.

For the smooth operation of such apparatuses, it is already known to equip the pumping assembly of such machines with an electronic control unit which allows to set the desired concrete flow rate - which may vary according to the type and physical conditions of the concrete, of the flow rate at which the concrete is fed to the pumping machine, of the dimensional and positional features of the casting areas, and of other possible variants - which is then kept constant for the whole duration of the casting, regardless of the position and of the type of movement of the distributor arm, to the advantage of the evenness of the casting itself and of the stability of the machine which is not influenced by flow rate fluctuations and by consequent oscillations of the arm which they determine.

Known-type electronic control units achieve the above-mentioned result by acting exclusively on the variable parameters of the pumping assembly, and in particular on the displacement of the oleodinamic pump which feeds the hydraulic circuit actuating the concrete pump, and possibly the speed of the concrete pump, usually consisting of a pair of alternately-working cylinders which lead to a single delivery channel through a so-called S-valve. In such known systems the

oleodinamic pump is directly driven by the main engine of the self-propelled machine, which is an internal combustion engine, the pump consequently having the same speed as the main engine.

Such a control system allows to achieve excellent results in terms of maintaining a constant concrete flow rate, but it is not equally satisfying in terms of energy consumption. As a matter of fact, before starting the oleodinamic pump, the main engine is manually brought to a steady speed by the operator, on the basis of his practical experience, which is sufficient to meet the energy requirement from the pumping assembly, which requirement may vary even substantially according to the physical features of the pumped concrete and to the casting area location. All in all, in order to be able to always work in safe conditions, under current practice the engine is kept at a higher speed than necessary, with resulting energy waste, i.e. a remarkably higher energy consumption than what is strictly necessary for concrete transportation and delivery to the casting areas.

It is hence an object of the present invention to provide an automatic system for the control and optimisation of the energy consumption of a self-propelled concrete pumping machine, and hence, after all, of the fuel consumption of the corresponding main engine which, upon the same performance with the concrete pumps currently available on the market, allows to obtain a remarkable reduction of energy consumption.

According to the present invention, such object is achieved through an automatic system for the control and optimisation of fuel consumption of a self-propelled concrete pumping machine having the essential features defined in the attached main claim. Further features of the invention are defined in the dependent claims.

According to the main idea of the present invention, the flow rate control of the pumping assembly is no longer performed, as in the known art, solely by acting on the variable parameters of such assembly, but rather acting also on the adjustment parameters of the main internal combustion engine of the self-propelled machine which drives into motion the oleodinamic pump.

In order to achieve this result, the peripheral electronic units controlling the main engine and the pumping assembly are interfaced through a system transmitting CAN Bus signals to a central processing unit, nevertheless already often found on self-propelled concrete pumping machines, to control the many devices found in these machines.

The electronic control units of the main engine and of the pumping assembly are apt to receive the signals originating from a plurality of sensors which detect the current operating conditions of said apparatuses, as well as to transmit controls for the variation of said parameters following instructions received from the central unit,

A speed sensor, a sensor of the delivered torque and an instant fuel consumption sensor can for example be associated to the main engine. A concrete pressure sensor, a concrete flow rate sensor, a sensor of the cycles/min. of the concrete pump, a speed sensor of the oleodinamic pump, as well as temperature and pressure sensors of the oleodinamic fluid can for example be associated to the pumping assembly.

On the basis of the data detected by such sensors, the peripheral control units of the main engine and of the pumping assembly calculate, in a manner known per se, the instant operating parameters of such apparatuses. This data is then transmitted to the central processing unit which saves it in a suitable area for later processing.

In such memory area of the central processing unit, data concerning efficiency curves of the main engine, of the oleodinamic pump and of the concrete pump are further stored beforehand according to the different operating parameters of such apparatuses.

Finally, the central processing unit is equipped with a programme for the optimisation of energy consumption which, according to the concrete flow rate set from time to time by the user, calculates the combination of the parameters of the apparatuses indicated above, which allows to maximise the overall efficiency of the machine, and issues control signals to the peripheral units controlling the main engine and the pumping assembly, so as to obtain the desired constant concrete flow rate with minimum fuel consumption by the main engine.

As an alternative to the processing mode indicated above - or as a cross check of the same after having achieved a first optimisation condition of energy consumption - the central processing unit can proceed to a direct verification of the value of instant fuel consumption, the delivered concrete flow rate being equal, by modulating in opposite directions the two main operating parameters of the machine, i.e. the speed of the main engine and the displacement of the oleodinamic pump, and hence seeking the conditions of minimum value of instant fuel consumption.

Unlike what happens in known-type control systems, the control system of the present invention hence achieves the main object of maintaining the concrete preset constant flow rate by acting not only on the operating parameters of the pumping assembly - i.e. of the oleodinamic pump and of the concrete pump - but also on the operating parameters of the main internal combustion engine, with the object of maximising the overall efficiency of the cinematic chain consisting of all said apparatuses.

This operation is of course carried out in a fully automatic way by the control software of the central processing unit, while the operator is left, as in the previous known art, with the only task of setting the desired concrete pumping flow rate value.

Control of the maximum efficiency conditions of the main engine and of the pumping assembly is of course performed continuously by the central unit, on the basis of the data supplied by the peripheral units integrated in time periods of a convenient length, so that variations in the physical features of the concrete or in the positioning of the outlet, or even in the user's input of a different desired flow rate value, are immediately taken into account, not only, as already known, to keep the delivery flow rate constant at the currently set value, but also to continuously keep all the above-mentioned apparatuses as close as possible to their range of minimum energy consumption.

Finally, the central processing unit keeps continuously under control the power and torque supplied by the main engine. If, during operation of the concrete pump, the central unit should detect that the maximum power and torque values available from the main engine have been reached, it provides to issue a warning signal to a suitable display and to simultaneously reduce rate flow, for example decreasing the number of cycles/min. of the concrete pump, so as to keep the power and torque values supplied by the main engine within the maximum admissible limits, and hence avoiding any harmful overloading of the engine itself.

Preferably, the value of the power absorbed is shown on the display in the form of an incremental bar from 0 to 100%, whereas another incremental bar indicator may show the negative percentage deviation of the concrete flow rate from the flow rate value that the user has last set, when the system has reached the maximum power available.

The system for the control and optimisation of the present invention can be usefully implemented in the radio control systems usually used for the control and drive of self-propelled concrete pumping machines. Said radio control can communicate with the central processing unit through the same CAN Bus protocol whereby such unit exchanges information with the peripheral electronic units for the control of the main engine and of the pump assembly and it can incorporate a display on which all the main system operation data and the above described incremental bars are shown.

Thanks to the novel control architecture described above, the system of the present invention has fully achieved the set object. As a matter of fact, by performing a multiple control on all the apparatuses which govern the operation of the concrete-pumping machine, including the main internal combustion engine, it is possible to achieve the main object of maintaining the concrete flow rate at a preset value, simultaneously modulating the operating parameters of said apparatuses so that all such apparatuses work in conditions of minimum energy consumption. With the system of the present invention it is hence possible to eliminate any previous energy waste of concrete-pumping machines thereby obtaining a remarkable fuel consumption reduction in the main engine of the same, without the functional performance of such machines being in the least affected.

The invention has been described with reference to a general diagram showing the architecture of the control system of the pumping apparatuses of a self-propelled concrete pumping machine, without going into detail about the implementations of the individual steps and of the individual components of the same, which implementations can be effected by employing various techniques and various devices, but all widely known and available to people skilled in the field. All these different possible specific ways of carrying out the individual steps and the specific component of the control system are to be considered comprised in the scope of the invention, as defined in the attached claims.

## Claims

1. A system for the control and optimisation of fuel consumption of a self-propelled concrete pumping machine, of the type comprising a main internal combustion engine and a pumping assembly consisting of at least one oleodinamic pump driven by such main engine and apt to drive the concrete pump, said pumping assembly being controlled by an electronic unit to keep a preset constant concrete delivery flow rate, **characterised in that** it further comprises an electronic unit controlling the main engine and a central processing unit, **in that** said peripheral units controlling the main engine and the pumping assembly and said central processing unit are interconnected for data exchange through a CAN Bus data transmission system, and **in that** said central unit processes the data received from said peripheral units and issues control signals to the same to keep the fuel consumption of the main engine down to a minimum at a desired constant flow rate, set by the user, of the concrete delivered by the pumping assembly.

2. The control system as in claim 1), wherein said peripheral electronic control unit of the main engine detects the operating parameters of said engine through a speed sensor, a delivered-torque sensor and an instant fuel consumption sensor.

3. The control system as in claim 1), wherein said peripheral electronic control unit of the pumping assembly detects the operating parameters of said assembly through a concrete pressure sensor, a concrete flow rate sensor, a loop/min. sensor of the concrete pump, a sensor of the speed of the oleodinamic pump, as well as a temperature sensor and a pressure sensor of the oleodinamic fluid.

4. The control system as in claims 2) and 3), wherein the data detected by said sensors are processed by said peripheral units and sent to said central unit, in the form of operating parameters of the main engine, of the oleodinamic pump and of the concrete pump, to be stored in a memory area of the same.

5. The control system as in claim 4), wherein data concerning the efficiency curves of the main engine, of the oleodinamic pump and of the concrete pump are further stored beforehand in said memory area, according to the different operating parameters of such equipment.

6. Control system as in claims 4) and 5), wherein said central processing unit processes the data received from said peripheral units, possibly integrated over time, and controls the variable parameters of the main engine and of the pumping assembly to maximise the overall efficiency of all such equipment on the basis of the stored efficiency data of the same, at the same time keeping constant the delivered concrete flow rate at a value preset by the user.

7. The control system as in claim 4), wherein said central processing unit processes the data received from said peripheral units, possibly integrated over time, and controls the variable parameters of the main engine and of the pumping assembly to minimise the fuel consumption per time unit of the main engine, at the same time keeping constant the delivered concrete flow rate at a value preset by the user.

8. The control system as in claim 6), wherein said variable parameters are the speed of the main engine, the displacement of the oleodinamic pump, and the number of cycles/min. of the concrete pump.

9. The control system as in claim 7), wherein said variable parameters are the speed of the main engine and the displacement of the oleodinamic pump.

10. The control system as in any one of the previous claims, wherein the central unit compares the data concerning the instant power delivered by the main engine against the previously stored data relating to the maximum admissible power and issues a warning signal when the difference between such values becomes smaller than a preset value.

11. The control system as in claim 10), wherein the central unit progressively reduces the concrete delivery flow rate to keep the power supplied by the main engine below a maximum value not exceeding the maximum admissible power of the same.

12. The control system as in claim 11), wherein the above flow rate reduction is effected by decreasing the number of cycles/min. of the concrete pump.

13. The control system as in claim 10), comprising an indicator, preferably in the form of an incremental bar 0-100%, of the power supplied by the main engine.

14. The control system as in claim 11), comprising an indicator of the percentage deviation of the instant flow rate value of the delivered concrete from the value preset by the user.

15. The control system as in any one of the previous claims, further comprising a radio-control, connected to said central unit through a CAN Bus signal transmission system, containing a device for the input of data relative to the desired concrete flow rate value and a display showing the main operating parameters of the main engine and of the pumping assembly.

## Patentansprüche

1. System zur Steuerung und Optimierung des Kraftstoffverbrauchs einer Betonpumpenanlage mit Eigenantrieb der Art, die umfasst: einen Hauptverbrennungsmotor und eine Pumpenbaugruppe, die aus mindestens einer von diesem Hauptmotor angetriebenen ölhydraulischen Pumpe besteht, welche für den Antrieb der Betonpumpe geeignet ist, wobei die Pumpenbaugruppe mittels einer elektronischen Einheit gesteuert wird, um eine voreingestellte konstante Fließgeschwindigkeit des geförderten Betons aufrechtzuerhalten, **dadurch gekennzeichnet, dass** es weiterhin eine elektronische Einheit zur Steuerung des Hauptmotors und eine zentrale Verarbeitungseinheit umfasst, dass die den Hauptmotor und die Pumpenbaugruppe steuernden peripheren Einheiten und die zentrale Verarbeitungseinheit zwecks Datenaustausch miteinander über ein CAN-Bus-Datenübertragungssystem verbunden sind und dass die zentrale Einheit die von den peripheren Einheiten empfangenen Daten verarbeitet und Steuerungssignale an dieselben abgibt, um den Kraftstoffverbrauch des Hauptmotors bei einer vom Nutzer eingestellten konstanten Soll-Fließgeschwindigkeit des von der Pumpenbaugruppe geförderten Betons minimal niedrig zu halten.

2. Steuerungssystem nach Anspruch 1), **dadurch gekennzeichnet, dass** die periphere elektronische Steuerungseinheit des Hauptmotors die Betriebsparameter des Motors mittels eines Drehzahlgebers, eines Sensors für das erzeugte Drehmoment und eines Momentanwertsensors für den Kraftstoffverbrauch ermittelt.

3. Steuerungssystem nach Anspruch 1), **dadurch gekennzeichnet, dass** die periphere elektronische Steuerungseinheit der Pumpenbaugruppe die Betriebsparameter der Baugruppe mittels eines Betondrucksensors, eines Betonfließgeschwindigkeitssensors, eines Sensors für die Betonpumpentakte/Min., eines Sensors für die Geschwindigkeit der ölhydraulischen Pumpe, sowie eines Temperatursensors und eines Sensors für den Druck der ölhydraulischen Flüssigkeit ermittelt.

4. Steuerungssystem nach den Ansprüchen 2) und 3), **dadurch gekennzeichnet, dass** die durch die Sensoren ermittelten Daten von den peripheren Einheiten verarbeitet und in Form von Betriebsparametern des Hauptmotors, der ölhydraulischen Pumpe und der Betonpumpe an die zentrale Einheit gesendet werden, um in einem Speicherbereich derselben gespeichert zu werden.

5. Steuerungssystem nach Anspruch 4), **dadurch gekennzeichnet, dass** die Leistungskurven des Hauptmotors, der ölhydraulischen Pumpe und der Betonpumpe betreffende Daten ferner zuvor in dem Speicherbereich entsprechend den verschiedenen Betriebsparametern der Anlage gespeichert werden.

6. Steuerungssystem nach den Ansprüchen 4) und 5), **dadurch gekennzeichnet, dass** die zentrale Verarbeitungseinheit die von den peripheren Einheiten empfangenen und möglicherweise im Zeitverlauf integrierten Daten verarbeitet und die variablen Parameter des Hauptmotors und der Pumpenbaugruppe steuert, um die Gesamtleistung der ganzen Anlage auf der Grundlage der gespeicherten Leistungsdaten derselben zu maximieren und gleichzeitig die Fließgeschwindigkeit des geförderten Betons bei einem vom Nutzer eingestellten Wert konstant zu halten.

7. Steuerungssystem nach Anspruch 4), **dadurch gekennzeichnet, dass** die zentrale Verarbeitungseinheit die von den peripheren Einheiten empfangenen und möglicherweise im Zeitverlauf integrierten Daten verarbeitet und die variablen Parameter des Hauptmotors und der Pumpenbaugruppe steuert, um den Kraftstoffverbrauch des Hauptmotors pro Zeiteinheit zu minimieren und gleichzeitig die Fließgeschwindigkeit des geförderten Betons bei einem vom Nutzer eingestellten Wert konstant zu halten.

8. Steuerungssystem nach Anspruch 6), **dadurch gekennzeichnet, dass** die variablen Parameter die Drehzahl des Hauptmotors, die Verdrängung der ölhydraulischen Pumpe und die Anzahl der Zyklen/Min. der Betonpumpe sind.

9. Steuerungssystem nach Anspruch 7), **dadurch gekennzeichnet, dass** die variablen Parameter die Drehzahl des Hauptmotors und die Verdrängung der ölhydraulischen Pumpe sind.

10. Steuerungssystem nach einem der vorangehenden Ansprüche, **dadurch gekennzeichnet, dass** die zentrale Verarbeitungseinheit die Daten, welche die vom Hauptmotor momentan erbrachte Leistung betreffen, mit den zuvor gespeicherten Daten bezüglich der maximal zulässigen Leistung vergleicht und ein Warnsignal ausgibt, falls die Differenz zwischen diesen Werten einen voreingestellten Wert unterschreitet.

11. Steuerungssystem nach Anspruch 10), **dadurch gekennzeichnet, dass** die zentrale Einheit progressiv die Fließgeschwindigkeit des geförderten Betons verringert, um die vom Hauptmotor gelieferte Leistung unterhalb eines Maximalwerts zu halten, der die maximal zulässige Leistung desselben nicht übersteigt.

12. Steuerungssystem nach Anspruch 11), **dadurch gekennzeichnet, dass** die vorgenannte Verringerung der Fließgeschwindigkeit durch die Verringerung der Anzahl der Zyklen/Min. der Betonpumpe bewirkt wird.

13. Steuerungssystem nach Anspruch 10), umfassend: eine Anzeige der vom Hauptmotor gelieferten Leistung, vorzugsweise in Form einer Zuwachs-Balkenanzeige 0-100%.

14. Steuerungssystem nach Anspruch 11), umfassend: eine Anzeige der prozentualen Abweichung des Momentanwertes der Fließgeschwindigkeit des geförderten Betons von dem vom Nutzer voreingestellten Wert.

15. Steuerungssystem nach einem der vorangehenden Ansprüche, ferner umfassend: eine Funkfernsteuerung, die mit der zentralen Einheit durch ein CAN-Bus-Signalübertragungssystem verbunden ist, die eine Vorrichtung für die Eingabe von Daten bezüglich des Sollwerts der Fließgeschwindigkeit des Betons und eine Anzeige der Hauptbetriebsparameter des Hauptmotors und der Pumpenbaugruppe enthält.

## Revendications

1. Système pour la commande et l'optimisation de la consommation de combustible d'une machine de pompage du béton autopropulsée, du type comportant un moteur à combustion interne principal et un ensemble de pompage constitué d'au moins une pompe oléodynamique entraînée par ce moteur principal et apte à entraîner la pompe à béton, ledit ensemble de pompage étant commandé par une unité électronique afin de maintenir un débit préétabli constant d'écoulement de distribution du béton, **caractérisé en ce qu'**il comporte en outre une unité électronique commandant le moteur principal et une unité centrale de traitement, **en ce que** lesdites unités périphériques commandant le moteur principal et l'ensemble de pompage et ladite unité centrale de traitement sont interconnectées pour un échange de données par l'intermédiaire d'un système de transmission de données à bus CAN, et **en ce que** ladite unité centrale traite les données reçues desdites unités périphériques et délivre des signaux de commande à celles-ci afin de maintenir la consommation de combustible du moteur principal abaissée à un minimum à un débit d'écoulement constant souhaité, établi par l'utilisateur, du béton débité par l'ensemble de pompage.

2. Système de commande selon la revendication 1, dans lequel ladite unité de commande électronique périphérique du moteur principal détecte les paramètres de fonctionnement dudit moteur par l'intermédiaire d'un capteur de vitesse, d'un capteur de couple débité et d'un capteur de consommation instantanée de combustible.

3. Système de commande selon la revendication 1, dans lequel ladite unité de commande électronique périphérique de l'ensemble de pompage détecte les paramètres de fonctionnement dudit ensemble par l'intermédiaire d'un capteur de pression du béton, d'un capteur du débit d'écoulement du béton, d'un capteur de la vitesse de la pompe oléodynamique, ainsi que d'un capteur de température et d'un capteur de pression du fluide oléodynamique.

4. Système de commande selon les revendications 2 et 3, dans lequel les données détectées par lesdits capteurs sont traitées par lesdites unités périphériques et envoyées à ladite unité centrale, sous la forme de paramètres de fonctionnement du moteur principal, de la pompe oléodynamique et de la pompe à béton, pour être stockées dans une zone de mémoire de cette unité centrale.

5. Système de commande selon la revendication 4, dans lequel des données concernant les courbes de rendement du moteur principal, de la pompe oléodynamique et de la pompe à béton sont en outre stockées à l'avance dans ladite zone de mémoire, conformément aux différents paramètres de fonctionnement d'un tel équipement.

6. Système de commande selon les revendications 4 et 5, dans lequel ladite unité centrale de traitement traite les données reçues desdites unités périphériques, le cas échéant intégrées dans le temps, et commande les paramètres variables du moteur principal et de l'ensemble de pompage pour maximiser le rendement global de tout ce matériel sur la base des données de rendement stockées de celui-ci, tout en maintenant en même temps constant, à une valeur préétablie par l'utilisateur, le débit d'écoulement du béton distribué.

7. Système de commande selon la revendication 4, dans lequel ladite unité centrale de traitement traite les données reçues desdites unités périphériques, le cas échéant intégrées le temps, et commande les paramètres variables du moteur principal et de l'ensemble de pompage pour minimiser la consommation de combustible par unité de temps du moteur principal, tout en maintenant simultanément constant, à une valeur préétablie par l'utilisateur, le débit d'écoulement du béton distribué.

8. Système de commande selon la revendication 6, dans lequel lesdits paramètres variables sont la vitesse du moteur principal, le déplacement volumétrique de la pompe oléodynamique et le nombre de cycles/minute de la pompe à béton.

9. Système de commande selon la revendication 7, dans lequel lesdits paramètres variables sont la vitesse du moteur principal et le déplacement volumétrique de la pompe oléodynamique.

10. Système de commande selon l'une quelconque des revendications précédentes, dans lequel l'unité centrale compare les données concernant la puissance instantanée délivrée par le moteur principal aux données précédemment stockées concernant la puissance admissible maximale et délivre un signal d'avertissement lorsque la différence entre ces valeurs devient inférieure à une valeur préétablie.

11. Système de commande selon la revendication 10, dans lequel l'unité centrale réduit progressivement le débit d'écoulement de distribution du béton pour maintenir la puissance fournie par le moteur principal en dessous d'une valeur maximale ne dépassant pas la puissance admissible maximale de ce moteur.

12. Système de commande selon la revendication 11, dans lequel la réduction ci-dessus du débit d'écoulement est effectuée en diminuant le nombre de cycles/minute de la pompe à béton.

13. Système de commande selon la revendication 10, comportant un indicateur, avantageusement sous la forme d'une barre incrémentielle de 0 à 100 % de la puissance fournie par le moteur principal.

14. Système de commande selon la revendication 11, comportant un indicateur de l'écart en pourcentage de la valeur instantanée du débit d'écoulement du béton distribué par rapport à la valeur préétablie par l'utilisateur.

15. Système de commande selon l'une quelconque des revendications précédentes, comportant en outre une radio commande, connectée à ladite unité centrale par l'intermédiaire d'un système de transmission de signaux à bus CAN, contenant un dispositif pour l'entrée de données relatives à la valeur souhaitée du débit d'écoulement du béton et un dispositif d'affichage représentant les paramètres de fonctionnement principaux du moteur principal de l'ensemble de pompage.
